# EUROPEAN PATENT APPLICATION

(11) **EP 2 869 183 A1**
(43) Date of publication of application: **06.05.2015**
(21) Application number: 14183350.9
(22) Date of filing: 03.09.2014
(51) Int. Cl.: G06F 3/06

(54) **Information processing apparatus, storage device control circuit, and storage device control method**

(30) Priority: 31.10.2013 JP 2013227724
(71) Applicant: Fujitsu Limited, Kawasaki-shi, Kanagawa 211-8588 (JP)
(72) Inventor: Higeta, Masanori, Kanagawa, 211-8588 (JP); Hayasaka, Kazumi, Kanagawa, 211-8588 (JP)
(74) Representative: Hoffmann Eitle

(57) **Abstract**

Channels (8a-8f) have NAND flash memories (7a-7f). Data processing units (14a-14f) perform data processing on the NAND flash memories (7a-7f) by using the channels (8a-8f) according to a data processing command from a CPU (4). A configuration register (11) stores therein a configuration of groups into which the channels (8a-8f) are classified based on processing performances of the respective channels (8a-8f), and stores therein assignments of the data processing units (14a-14f) that perform data processing by using the channels (8a-8f) contained in each of the groups. The group identifying unit (13) selects a group for performing data processing from among the groups stored in the configuration register (11) based on the data processing command from the CPU4, and causes the data processing unit (14a-14f) assigned to the selected group to perform the data processing.

## Description

### FIELD

The embodiments discussed herein are related to an information processing apparatus, a storage device control circuit, and a storage device control method.

### BACKGROUND

In recent information processing apparatuses, systems that use memory devices, such as dynamic random access memories (DRAM) or NAND flash memories, as external storage devices have been widespread. For example, there is an information processing apparatus or the like, in which a dual inline memory module (DIMM) formed of multiple DRAMS is used as a memory and a solid state drive (SSD) formed of multiple NAND devices is used as a storage.

A memory controller that controls the memory devices as described above has multiple channels, to each of which several memory devices are connected in series. The information processing apparatus improves performances of read and write processes on the memory devices by accessing the channels in parallel.

Further, if a non-volatile memory is used as a storage, a data protection technique called a redundant arrays of inexpensive disks (RAID) may be used in order to improve fault tolerance.

The memory controller, upon receiving a write request from a central processing unit (CPU) or the like, performs processes, such as an address translation or a parity calculation in RAID. Subsequently, the memory controller transfers the write request and data to a channel having a memory device to which the data and a parity are to be written.

On the contrary, the memory controller, upon receiving a read request from the CPU or the like, performs a process, such as address translation. Subsequently, the memory controller transfers the read request to a channel having a memory device in which the data is stored, reads the data from this memory device, and transmits the data to a host. Channel control units can operate in parallel, so that by performing write and read on the respective channels in a distributed manner, it is possible to improve throughput to access the memory devices.

Meanwhile, in recent years, to improve the cost effectiveness, a storage device may be configured by integrating multiple types of memory controllers and storage devices. For example, a storage system is configured by combining an SSD, which enables high-speed read and write but which is expensive, and a hard disk drive, which performs read and write at a low speed but which is cheap. In this case, to cancel out a performance difference between the memory devices, there is a proposed technique that optimizes data allocation to each of the memory devices based on information, such as an access frequency, for each data.

Patent Document 1: Japanese Laid-open Patent Publication No. 2004-21370

However, in recent years, with the advent of high-capacity memory devices, a storage capacity managed by a single memory controller is increasing. Therefore, if the technique is used that optimizes data allocation to each of the memory devices based on information, such as an access frequency for each data, because the granularity of distribution control per controller is low, it is difficult to realize flexible optimization of use efficiencies.

To cope with this, it may be possible to change a processing performance in units of channels of the memory controller in order to take a balance of performance requirements. However, if the performance is biased for each channel in a single memory controller, requests to the channels with low processing speeds are accumulated in the memory controller and may compress resources shared by all of the channels. In this case, the entire processing speed may be reduced.

Accordingly, it is an object in one aspect of an embodiment of the invention to provide an information processing apparatus, a storage device control circuit, and a storage device control method that improve a processing performance and a resource efficiency.

### SUMMARY

According to an aspect of an embodiment, an information processing apparatus includes: an arithmetic processing unit; a plurality of channels each having a storage device; a plurality of data processing units that perform data processing on the storage devices by using the channels according to a data processing command from the arithmetic processing unit; a group managing unit that stores therein a configuration of groups into which the channels are classified based on processing performances of the respective channels, and stores therein assignments of the data processing units that perform data processing by using the channels contained in each of the groups; and a control unit that, based on the data processing command from the arithmetic processing unit, selects a group for performing data processing from among the groups stored in the group managing unit, and causes the data processing unit assigned to the selected group to perform the data processing.

### BRIEF DESCRIPTION OF DRAWINGS

FIG. 1 is a schematic configuration diagram of an information processing apparatus;
FIG. 2 is a block diagram of a NAND controller according to a first embodiment;
FIG. 3 is a diagram illustrating an example of a method of storing a group configuration by a configuration register;
FIG. 4 is a diagram illustrating another example of the method of storing the group configuration by the configuration register;
FIG. 5 is a diagram for explaining a case in which a group is selected on a CPU side;
FIG. 6 is a diagram illustrating an example of a group configuration;
FIG. 7 is a diagram illustrating another example of a group configuration;
FIG. 8 is a flowchart of data processing performed by the NAND controller according to the first embodiment;
FIG. 9 is a block diagram of a NAND controller according to a modified example;
FIG. 10 is a diagram for explaining an example of a case in which a group is selected on a NAND controller side;
FIG. 11 is a diagram for explaining another example of the case in which a group is selected on the NAND controller side;
FIG. 12 is a block diagram of a NAND controller according to a third embodiment;
FIG. 13 is a diagram illustrating an example of a device information table;
FIG. 14 is a flowchart for setting a group configuration according to the third embodiment;
FIG. 15 is a diagram illustrating an example of a group configuration by an information processing apparatus according to a fourth embodiment; and
FIG. 16 is a flowchart for setting a group configuration according to the fourth embodiment.

### DESCRIPTION OF EMBODIMENTS

Preferred embodiments of the present invention will be explained with reference to accompanying drawings. The information processing apparatus, the storage device control circuit, and the storage device control method disclosed in this specification will not be limited by the embodiments below.

### [a] First Embodiment

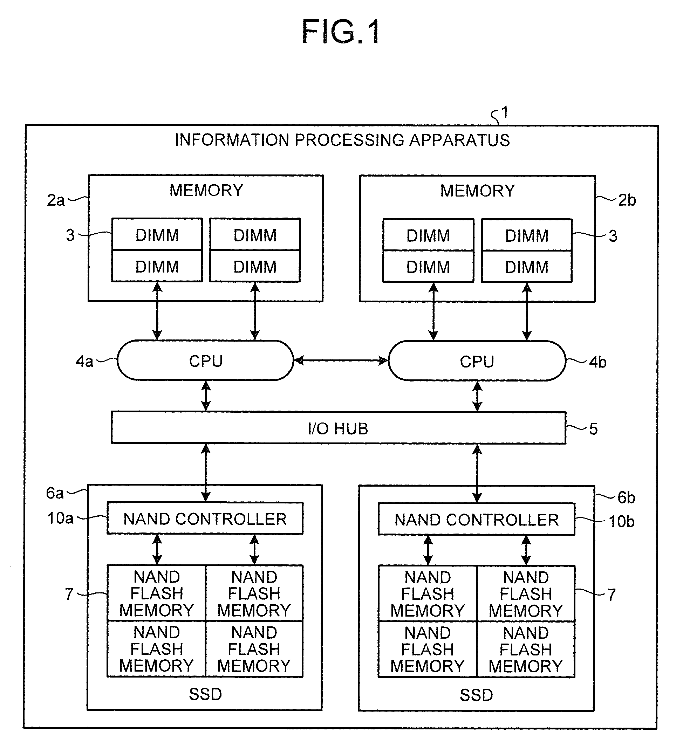

FIG. 1 is a schematic configuration diagram of an information processing apparatus. An information processing apparatus 1 includes multiple memories 2a and 2b, multiple CPUs 4a and 4b, an input output (I/O) hub 5, and multiple SSDs 6a and 6b.

The memories 2a and 2b include multiple DIMMs 3. The CPU 4a includes, although not illustrated, a memory controller that controls the memory 2a. The CPU 4b includes a memory controller that controls the memory 2b.

The SSD 6a includes a NAND controller 10a and multiple NAND flash memories 7 that are NAND devices. The SSD 6b includes a NAND controller 10b and multiple NAND flash memories 7. The SSD 6a and the SSD 6b have the same functions. Further, the NAND controller 10a and the NAND controller 10b have the same functions. In the explanation below, when the SSD 6b and the NAND controller 10b are not discriminated from the SSD 6a and the NAND controller 10a, they will be described as "the SSD 6" and "the NAND controller 10".

The memories 2a and 2b are storage devices that store therein data used for arithmetic processing by the CPUs 4a and 4b, respectively. The CPUs 4a and 4b are arithmetic processing devices that perform various types of arithmetic processing by using data stored in the DIMMs 3 provided in the memories 2a and 2b, respectively. For example, by using a non-uniform memory access (NUMA) technique, the CPUs 4a and 4b acquire data stored in the DIMMs 3 in the memories 2a and 2b and perform arithmetic processing by using the acquired data.

Further, the CPUs 4a and 4b acquire data stored in the SSDs 6a and 6b, respectively, via the I/O hub 5, and perform arithmetic processing by using the acquired data. Specifically, the CPU 4a issues a read request or write request for data to the SSD 6a, and reads or writes data from or to each of the NAND flash memories 7. For example, the CPU 4a issues, to the SSD 6a, a read request containing a logical address designating data to be read. Further, the CPU 4a issues a write request containing a logical address designating a destination to which data is to be written and containing the data to be written. The CPUs 4a and 4b are examples of an "arithmetic processing unit".

The NAND flash memories 7 are non-volatile memories that store therein various types of data. Specifically, the NAND flash memories 7 include multiple physical pages serving as data storage areas, and write data in units of a physical page. Further, the NAND flash memories 7 include multiple physical blocks with multiple physical pages, and delete data in units of a block. Meanwhile, a single physical page has a storage capacity of 8 kilobytes for example, and a single physical block has 128 physical pages for example. The NAND flash memories 7 are examples of "storage devices".

The NAND controller 10 accesses each of the NAND flash memories 7 and reads or writes data. For example, the NAND controller 10 includes an address translation table that stores therein a logical address, which is used when each of the CPUs 4a and 4b designates a storage area storing data, and a physical address, which indicates a storage area of the NAND flash memories 7 storing data, in an associated manner.

Upon receiving a logical address together with a read request, the NAND controller 10 identifies a physical address associated with the logical address by using the address translation table, and reads data from a storage area indicated by the identified physical address. Thereafter, the NAND controller 10 sends the read data to the CPU 4a or 4b via the I/O hub 5.

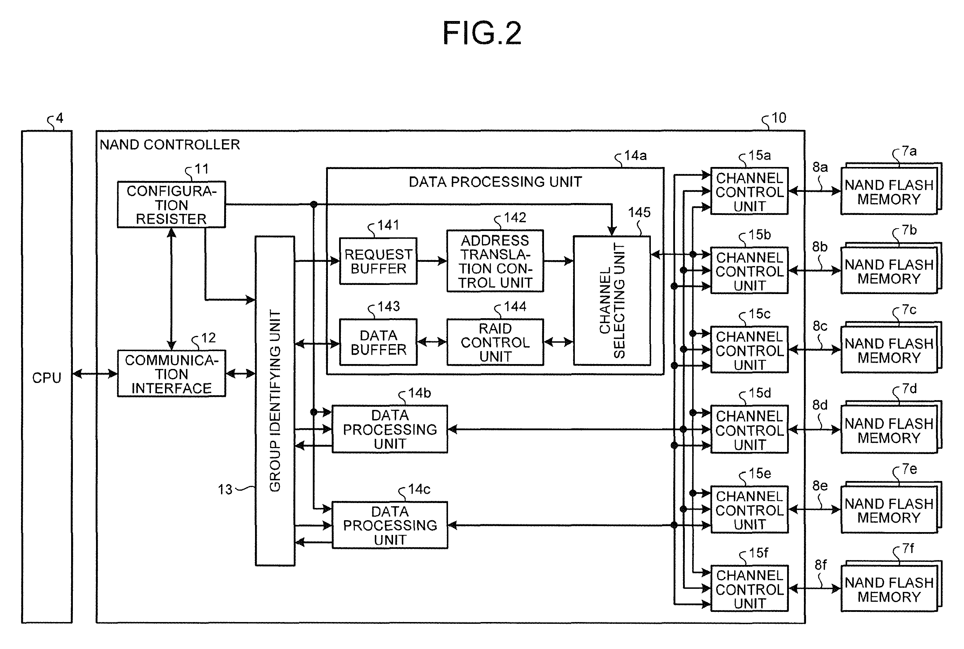

With reference to FIG. 2, the NAND controller 10 according to the present embodiment will be described in detail below. FIG. 2 is a block diagram of the NAND controller according to the first embodiment. In FIG. 2, NAND flash memories 7a to 7f are illustrated as examples of the NAND devices.

The NAND controller 10 according to the present embodiment includes a configuration register 11, a communication interface 12, a group identifying unit 13, data processing units 14a to 14c, and channel control units 15a to 15f.

Here, in the present embodiment, a case will be described in which the NAND controller 10 receives commands and data processing requests from a CPU 4; however, the NAND controller 10 may receive commands and data from other units of the information processing apparatus 1. Each unit of the information processing apparatus 1 that issues commands or processing requests to the NAND controller 10 may be referred to as a host device.

Further, respective transmission paths that connect the channel control units 15a to 15f and the NAND flash memories 7a to 7f are referred to as channels 8a to 8f. Furthermore, hereinafter, when the channel control units 15a to 15f are not discriminated from one another, they may be referred to as the channel control unit 15. Moreover, when the NAND flash memories 7a to 7f are not discriminated from one another, they may simply be referred to as the NAND flash memory 7. Furthermore, when the channels 8a to 8f are not discriminated from one another, they may be referred to as the channel 8.

Incidentally, in the present embodiment, a case will be described in which the three data processing units 14a to 14c and the six channels 8a to 8f are provided; however, the numbers of the data processing units and the channels are not limited to these examples.

Further, while the data processing units 14a to 14c have the same configurations, FIG. 2 illustrates specific blocks of only the data processing unit 14a. Hereinafter, the data processing units 14a to 14c may be simply referred to as the data processing unit 14 when they are not discriminated from one another.

The configuration register 11 stores therein a group configuration determined by a user. Further, the configuration register 11 stores therein assignment of each group to any of the data processing units 14a to 14c.

Specifically, upon receiving a write command or a read command from the CPU 4, the configuration register 11 performs write or read according to the command. For example, an operator instructs the CPU 4 to write a group configuration by using management software or a debugging interface that operates on the information processing apparatus 1. Then, the configuration register 11 stores therein the group configuration by writing it according to a write command transmitted by the CPU 4 in response to the instruction from the operator.

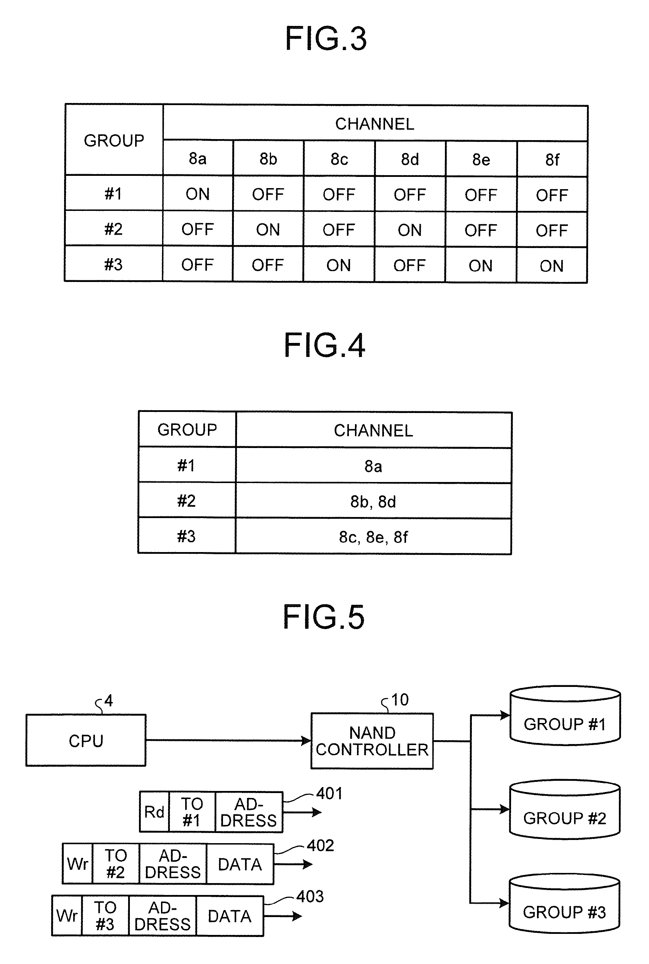

For example, the configuration register 11 stores therein the group configuration in a format as illustrated in FIG. 3. FIG. 3 is a diagram illustrating an example of a method of storing the group configuration by the configuration register. In the present embodiment, a case will be described in which the group configuration is formed of three groups that are the maximum number of groups that can be generated by the three data processing units 14a to 14c. However, it is sufficient that the group configuration be able to assign one or more data processing units to each group, and the number of the groups is not limited as long as it is equal to or smaller than the number of the data processing units.

The configuration register 11 stores therein a group configuration by storing information indicating which of the channels 8a to 8f belong to each group as illustrated in FIG. 3. In FIG. 3, a field corresponding to a group to which each of the channels belongs is set to ON to indicate the group to which each of the channels belongs. For example, as for the channel 8a, a field corresponding to a group #1 is set to ON and fields corresponding to groups #2 and #3 are set to OFF. That is, the channel 8a belongs to the group #1. Meanwhile, in the present embodiment, the group #1 is assigned to the data processing unit 14a, the group #2 is assigned to the data processing unit 14b, and the group #3 is assigned to the data processing unit 14c. The configuration register 11 is an example of a "group managing unit".

Incidentally, FIG. 3 is an example of the method of storing the group configuration, and the way to store information in the configuration register 11 is not specifically limited as long as it is possible to specify a group to which each channel belongs. For example, FIG. 4 is a diagram illustrating another example of the method of storing the group configuration by the configuration register. As illustrated in FIG. 4, the configuration register 11 may store the group configuration by listing pieces of identification information on channels belonging to each group, in association with each group.

In the present embodiment, the group configuration stored in the configuration register 11 is set such that all of the channels belong to any of the groups without duplication. Further, the number of the groups is equal to or smaller than the number of the data processing units 14a to 14c, and, in the present embodiment, the maximum number of the groups is three. Hereinafter, three, which is the maximum number of the groups, may be referred to as the number of all of the groups.

The communication interface 12 is an interface that mediates communication between the CPU 4 and each unit of the NAND controller 10. In reality, the CPU 4 and each unit of the NAND controller 10 communicate with each other via the communication interface 12; however, hereinafter, mediation of the communication interface 12 may be omitted for convenience of explanation.

The group identifying unit 13 receives a group configuration from the configuration register 11. Further, the group identifying unit 13 receives a data processing request, such as read or write, from the CPU 4. In the present embodiment, as will be described later, the CPU 4 stores information on a destination group of the processing request in the data processing request.

The group identifying unit 13 selects the data processing unit 14 corresponding to the destination group designated by the processing request from among the data processing units 14a to 14c by using information that is about the data processing units 14a to 14c assigned to each of the groups and that is received from the configuration register 11. Then, the group identifying unit 13 transmits the received data processing request to the selected data processing unit 14.

Thereafter, the group identifying unit 13 returns, to the CPU 4, a response to the processing request. For example, if the processing request is a data write request, the group identifying unit 13 returns, to the CPU 4, a response indicating that transfer of the data processing request to the data processing unit 14 is completed. Further, if the processing request is a read request, the group identifying unit 13 receives, as a response to the processing request, data designated by the read request from a data buffer 143 to be described later. Then, the group identifying unit 13 transmits the received data to the CPU 4 as a response to the processing request. The group identifying unit 13 corresponds to an example of a "control unit".

The data processing unit 14 includes a request buffer 141, an address translation control unit 142, the data buffer 143, a RAID control unit 144, and a channel selecting unit 145.

The request buffer 141 receives, from the group identifying unit 13, input of data processing requests to a group corresponding to the data processing unit 14 provided therewith. The request buffer 141 accumulates the received processing requests. Then, if the address translation control unit 142 is not performing a process, the request buffer 141 outputs the oldest processing request to the address translation control unit 142.

The address translation control unit 142 receives input of the data processing request from the request buffer 141. The address translation control unit 142 translates an address designated by the processing request into an address of the NAND flash memory 7 on the channel connected to the data processing unit 14 provided therewith. Then, the address translation control unit 142 outputs the translated address and the processing request to the channel selecting unit 145.

If the processing request is a data write request, the data buffer 143 receives, from the group identifying unit 13, pieces of data that are targets of the data processing request directed to the group corresponding to the data processing unit 14 provided therewith. The data buffer 143 accumulates the received pieces of the data. Then, if the RAID control unit 144 is not performing a process, the data buffer 143 outputs the oldest piece of data to the RAID control unit 144.

Further, if the processing request is a data read request, the data buffer 143 receives input of pieces of data from the RAID control unit 144. Then, the data buffer 143 accumulates the received pieces of the data. Thereafter, if the group identifying unit 13 is in a state in which a process is executable, the oldest piece of data is output to the group identifying unit 13.

If the processing request is a write request, the RAID control unit 144 receives input of data from the data buffer 143. Then, the RAID control unit 144 performs RAID processing on the data in accordance with a RAID configuration of the NAND flash memory 7 serving as a destination of the data. For example, in the case of a RAID5, the RAID control unit 144 calculates a parity by using the received data. Thereafter, the RAID control unit 144 outputs the data subjected to the RAID processing to the channel selecting unit 145.

Further, if the processing request is a read request, the RAID control unit 144 receives input of data from the channel selecting unit 145. Then, the RAID control unit 144 performs RAID processing, such as data reconfiguration. Thereafter, the RAID control unit 144 outputs the data subjected to the RAID processing to the data buffer 143.

The channel selecting unit 145 receives the group configuration from the configuration register 11. Then, the channel selecting unit 145 connects to the channel belonging to the group to which the data processing unit 14 provided therewith is assigned. Herein, a case will be described in which the channels 8a and 8b are the channels belonging to the group to which the data processing unit 14 provided with the channel selecting unit 145 is assigned.

The channel selecting unit 145 receives input of a processing request from the address translation control unit 142. Further, if the processing request is a write request, the channel selecting unit 145 receives input of data from the RAID control unit 144.

Then, the channel selecting unit 145 outputs the processing request to the channel control unit 15 connected to the channel having the NAND flash memory 7 corresponding to the address designated by the processing request among the channel control units 15 connected to the channels 8a and 8b. Further, if the processing request is a write request, the channel selecting unit 145 outputs data to the channel control unit 15 that has output the processing request.

Thereafter, if the processing request is a data read request, the channel selecting unit 145 receives, from the channel control units 15, data that the channel control units 15 belonging to the same group have read from the NAND flash memories 7. Then, the channel selecting unit 145 outputs the received data to the RAID control unit 144.

The channel control units 15 acquire addresses designated by the processing request. Subsequently, the channel control units 15 perform processes on the designated addresses of the NAND flash memories 7 on the channels 8a and 8b.

For example, if the processing request is a write request, the channel control units 15 write the received data in the designated addresses of the NAND flash memories 7 on the channels 8a and 8b in accordance with the RAID configuration. Furthermore, if the processing request is a read request, the channel control units 15 read data from the the designated addresses of the NAND flash memories 7 on the channels 8a and 8b. Then, the channel control units 15 output the data read from the NAND flash memories 7 to the channel selecting unit 145 of the data processing unit 14 connected to the channel control units 15.

The NAND flash memories 7a to 7f transmit and receive data to the channel control units 15 belonging to the groups to which the corresponding channels 8a to 8f are assigned.

As described above, the data processing unit 14 performs data read and write processes. Further, as described above, the channels 8 are grouped for each of the data processing units 14. Namely, the information processing apparatus 1 according to the present embodiment is able to perform independent data processing for each group.

With reference to FIG. 5, the outline of data processing based on the processing request according to the present embodiment will be described. FIG. 5 is a diagram for explaining a case in which a group is selected on a CPU side. In the present embodiment, the CPU 4 selects a group to be a target of a processing request as described above. Specifically, the CPU 4 acquires information on the groups from the configuration register 11. At this time, the CPU 4 also acquires performance information on each group, such as information on performances of the channels 8 belonging to each group. Then, when generating a data processing request, the CPU 4 determines which of the groups is caused to perform the processing request according to the performance information on each of the groups. Subsequently, the CPU 4 adds, as information on a destination group, the determined group to the processing request.

In this case, a destination group is stored in the data processing request as in processing requests 401 to 403 illustrated in FIG. 5. The processing request 401 is an example of a read request. The processing request 401 is a request to read data from the group #1. Further, the processing requests 402 and 403 are examples of a write request. The processing request 402 is a request to write data to the group #2. The processing request 403 is a request to write data to the group #3.

The NAND controller 10 acquires a destination group stored in the processing request 401, and determines that the processing request 401 is a process on the group #1. Then, the NAND controller 10 reads data from the NAND flash memory 7 on the channel 8 belonging to the group #1.

Further, the NAND controller 10 acquires a destination group stored in the processing request 402, and determines that the processing request 402 is a process on the group #2. Then, the NAND controller 10 writes data to the NAND flash memory 7 on the channel 8 belonging to the group #2. Furthermore, the NAND controller 10 acquires a destination group stored in the processing request 403, and determines that the processing request 403 is a process on the group #3. Then, the NAND controller 10 writes data to the NAND flash memory 7 on the channel 8 belonging to the group #3.

As in the present embodiment, when a group is designated by a host device side, such as the CPU 4, the host device recognizes each of the groups as an individual storage unit.

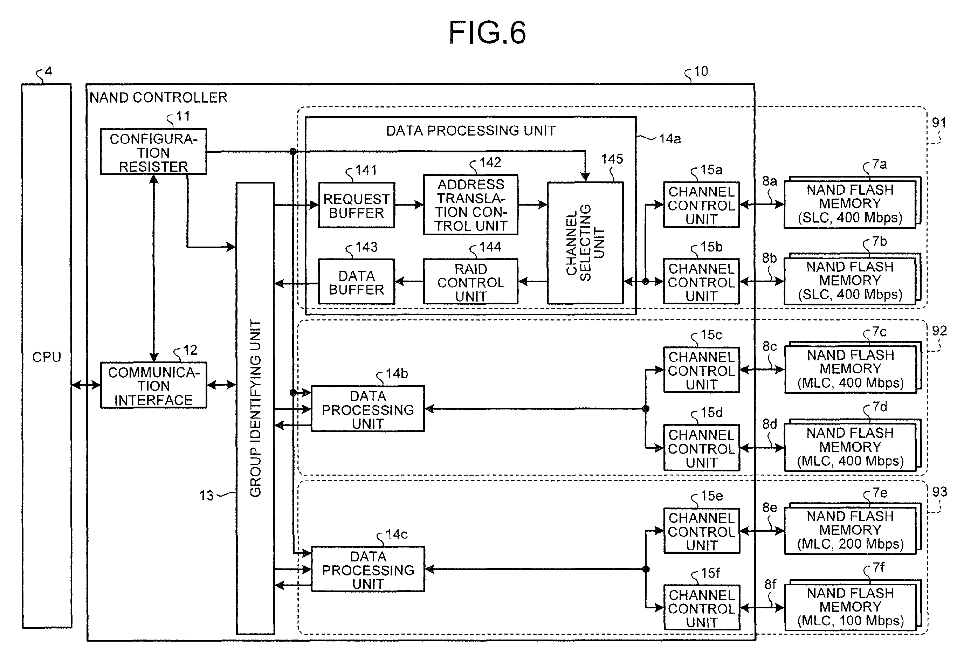

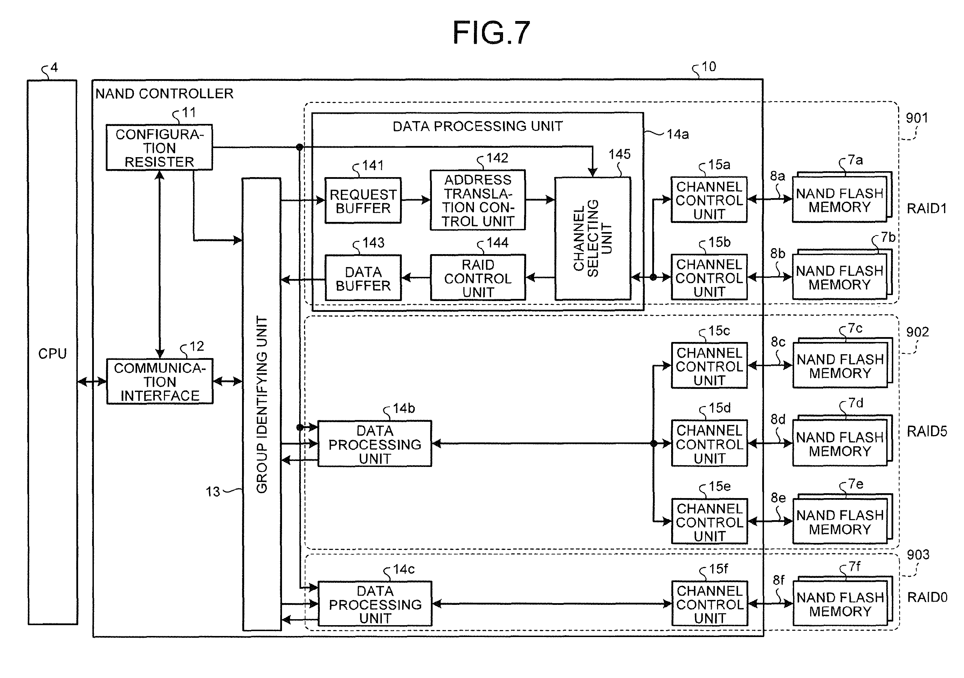

Next, with reference to FIG. 6 and FIG. 7, various group configurations will be described. FIG. 6 is a diagram illustrating an example of the group configuration. FIG. 7 is a diagram illustrating another example of the group configuration.

For example, as illustrated in FIG. 6, performances of the NAND flash memories 7a to 7f may differ from one another. Pieces of information in parentheses in the NAND flash memories 7a to 7f in FIG. 6 indicate types and speeds. For example, (SLC, 400 Mbps) indicates that a type is a single level cell and a speed is 400 Mbps. Further, MLC indicates that a type is a multi level cell. In this example, the performances of the NAND flash memories 7a and 7b are the same. Further, the performances of the NAND flash memories 7c and 7d are the same. Furthermore, the performances of the NAND flash memories 7e and 7f are different, but as compared with the performance differences from the NAND flash memories 7a to 7d, the performances of the NAND flash memories 7e and 7f are almost the same. Therefore, if the NAND flash memories 7 with the same performances are set in the same group, a group configuration as illustrated in FIG. 6 is obtained. In this case, the channels 8a and 8b with the NAND flash memories 7a and 7b have the highest performances. Further, the channels 8c and 8d with the NAND flash memories 7c and 7d have the second highest performances. Furthermore, the channels 8e and 8f having the NAND flash memories 7e and 7f are the lowest.

In FIG. 6, the channels 8a and 8b belong to a group 91. The group 91 is assigned, as the group #1, to the data processing unit 14a. Further, the channels 8c and 8d belong to a group 92. The group 92 is assigned, as the group #2, to the data processing unit 14b. Furthermore, the channels 8e and 8f belong to a group 93. The group 93 is assigned, as the group #3, to the data processing unit 14c.

For example, the CPU 4 selects a group according to the degree of importance of a process. The CPU 4 classifies the degree of importance of a process into a high level, a medium level, or a low level. If the degree of importance of a process is the high level, the CPU 4 decides to cause the group 91, to which the channels 8a and 8b with the highest performances belong, to perform the process of the processing request. Further, if the degree of importance of a process is the medium level, the CPU 4 decides to cause the group 92, to which the channels 8c and 8d with the medium performances belong, to perform the process. Furthermore, if the degree of importance of a process is the low level, the CPU 4 decides to cause the group 93, to which the channels 8e and 8f with the lowest performances belong, to perform the process.

In FIG. 6, if the CPU 4 selects the group 91 as a destination of the data processing request, the group identifying unit 13 sends the data processing request to the data processing unit 14a. Then, the data processing unit 14a performs data processing by using either the channel 8a or 8b.

Further, as another group configuration, as illustrated in FIG. 7, RAID configurations of the NAND flash memories 7a to 7f may differ from one another. In FIG. 7, the NAND flash memories 7a and 7b form a RAID1. Further, the NAND flash memories 7c to 7e form a RAID5. Furthermore, the NAND flash memory 7f forms a RAID0. Therefore, if the NAND flash memories 7 belonging to the same RAID group are set as the same group, a group configuration as illustrated in FIG. 7 is obtained.

In FIG. 7, the channels 8a and 8b belong to a group 901. The data processing unit 14a is assigned to the group 901 serving as the group #1. Further, the channels 8c to 8e belong to a group 902. The data processing unit 14b is assigned to the group 902 serving as the group #2. Furthermore, the channel 8f belongs to a group 903. The data processing unit 14c is assigned to the group 903 serving as the group #3. Meanwhile, the RAID0 has the highest data read/write speed, but has the lowest reliability. On the contrary, the RAID1 and the RAID5 have higher reliabilities than that of the RAID0. Further, the RAID1 has a higher data read/write speed than that of the RAID5. The RAID5 has the lowest data read/write speed.

In this case, for example, the CPU 4 selects a group according to the degree of importance of a process. The CPU 4 classifies the degree of importance of a process into a high level, a medium level, or a low level. Then, if the degree of importance is the high level, the CPU 4 decides to cause the group 901, in which the RAID1 with a higher reliability and a higher process speed is formed, to perform the process. Further, if the degree of importance is the medium level, the CPU 4 decides to cause the group 902, in which the RAID5 with a higher reliability and a lower processing speed is formed, to perform the process. Furthermore, if the degree of importance is the low level, the CPU 4 decides to cause the group 903, in which the RAID0 with a lower reliability is formed, to perform the process.

In FIG. 7, if the CPU 4 selects the group 902 as a destination of the data processing request, the group identifying unit 13 sends the data processing request to the data processing unit 14b. Then, the data processing unit 14b performs data processing by using any of the channels 8c to 8e.

However, the group configurations illustrated in FIG. 6 and FIG. 7 are only examples, and the group configuration is not specifically limited.

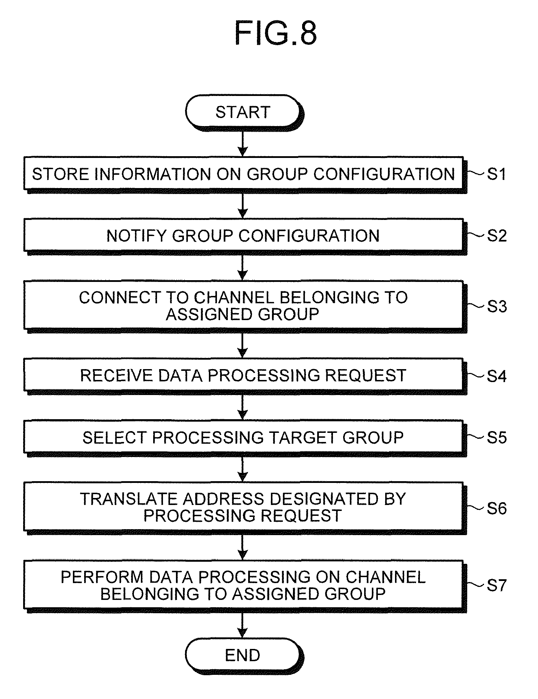

Next, with reference to FIG. 8, the flow of data processing performed by the NAND controller 10 according to the present embodiment will be described below. FIG. 8 is a flowchart of the data processing performed by the NAND controller according to the first embodiment.

The configuration register 11 stores therein information on a group configuration (Step S1).

The configuration register 11 notifies the group identifying unit 13 and the channel selecting unit 145 of the group configuration (Step S2).

The channel selecting unit 145 connects to the channel 8 belonging to a group to which the data processing unit 14 provided therewith belongs (Step S3).

The group identifying unit 13 receives a data processing request (Step S4).

Subsequently, the group identifying unit 13 acquires a destination group of the processing request, and selects the destination group as a processing target group (Step S5).

The address translation control unit 142 translates an address designated by the processing request into an address of the NAND flash memory 7 (Step S6).

The data processing unit 14 performs data processing on the the channel 8 belonging to the assigned group, by using the channel control unit 15 connected by the channel selecting unit 145 (Step S7).

As described above, the information processing apparatus according to the present embodiment classifies the channels into groups and performs data processing for each of the groups. Therefore, the information processing apparatus according to the present embodiment can perform individual data processing for each of the groups. Further, the channels are classified into groups according to processing performances. Therefore, even when there are processing performance differences between the channels, the channels with different performances can operate in parallel without being interfered with one another. As a result, it becomes possible to implement the performances of storage devices on all of the channels depending on the intended use, without any waste.

Further, even when the performance of each of the channels changes due to a change in mounting states of the memory devices or a change in the RAID configurations, it becomes possible to, only by changing the group configuration, prevent a reduction in processing capabilities caused by performance differences between the channels. That is, it becomes possible to improve the performance of the entire system and the resource use efficiency without redesigning hardware, such as a large scale integration (LSI).

### Modified example

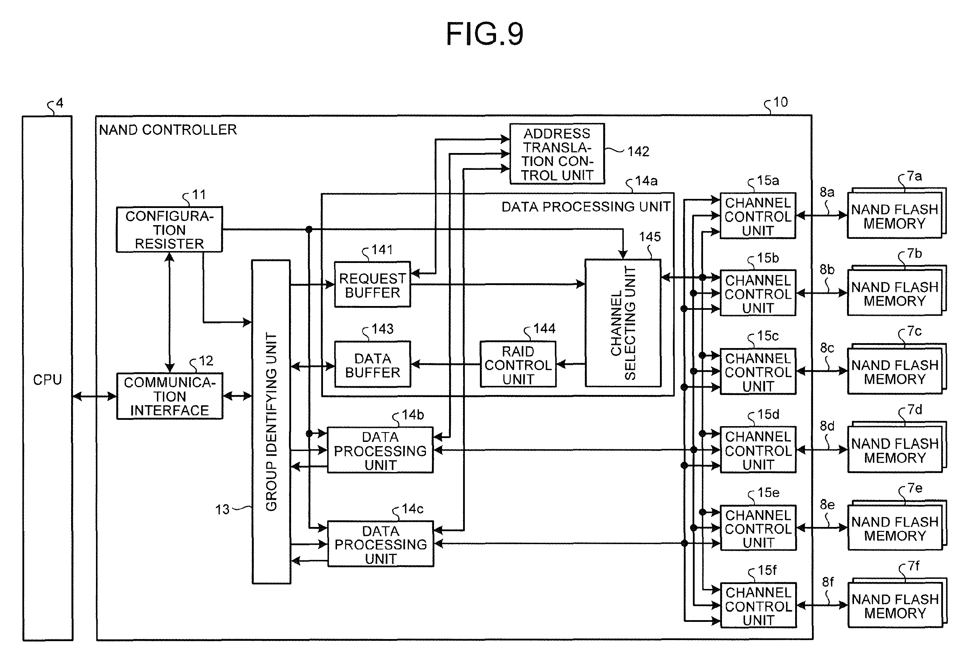

Next, with reference to FIG. 9, a modified example of the first embodiment will be described. FIG. 9 is a block diagram of a NAND controller according to the modified example.

A NAND controller 10 according to the present modified example differs from the first embodiment in that, as illustrated in FIG. 9, the address translation control units 142 are integrated into a single unit.

In the present modified example, the request buffer 141 outputs a processing request to the address translation control unit 142. Thereafter, the request buffer 141 receives the processing request subjected to an address translation from the address translation control unit 142.

Then, the request buffer 141 transmits the processing request subjected to the address translation to the channel selecting unit 145 to issue a request for an access to the NAND flash memory 7.

The address translation control unit 142 receives a processing request from each of the request buffers 141 of the data processing units 14a to 14c. Then, the address translation control unit 142 performs arbitration to determine priorities on a first-come, first-served basis or in an arbitrary manner, and performs an address translation on each processing request. Subsequently, the address translation control unit 142 returns the processing request subjected to the address translation to the request buffer 141 serving as a transmission source of the processing request.

As described above, the NAND controller according to the present modified example is configured such that the address translation control units of the data processing units of the first embodiment are formed into a common unit and the other functions are provided to each of the data processing units. The address translation does not cause a delay in processes on other processing requests; therefore, even when an address translation function is shared as described above, it becomes possible to maintain the same advantageous effects as those of the first embodiment. Further, the present modified example is an example of sharing of functions, and other functions may be shared as long as the functions do not cause a delay in processes on other processing requests in the data processing unit.

Further, while the NAND controller that controls the NAND flash memory has been described as an example in the above explanation, the present invention may be applied to other controllers as long as the controllers control storage devices, such as memory devices. For example, the present invention may be applied to a memory controller that controls the DIMMs 3 in FIG. 1.

### [b] Second Embodiment

Next, a second embodiment will be described. An information processing apparatus according to the present embodiment differs from the first embodiment in that a group is selected by a NAND controller side. A block diagram of the NAND controller 10 according to the present embodiment is the same as FIG. 2. In the descriptions below, explanation of components with the same functions as those of the first embodiment will be omitted.

In the present embodiment, the CPU 4 determines a priority of a process in the case of a write process. Then, the CPU 4 adds the priority of the process to a processing request.

The group identifying unit 13 receives a processing request from the CPU 4. If the processing request is a read request, the group identifying unit 13 outputs the processing request to the data processing unit 14 assigned to a group, to which the channel 8 corresponding to the NAND flash memory 7 having a storage area corresponding to an address designated by the processing request belongs.

On the contrary, if the processing request is a write request, the group identifying unit 13 acquires the priority stored in the processing request. The group identifying unit 13 stores therein association between each priority and a group. For example, a case will be described in which the groups 91 to 93 are provided by classification as illustrated in FIG. 6. In FIG. 6, the performances of the channels 8a and 8b are the highest, the performances of the channels 8c and 8d are the second highest, and the performances of the channels 8e and 8f are the lowest.

The group identifying unit 13 stores therein a first threshold and a second threshold for associating the priority of the processing request with a group. The second threshold is a threshold for a priority lower than that of the first threshold.

If the priority is equal to or greater than the first threshold, the group identifying unit 13 outputs the processing request to the data processing unit 14a assigned to the group 91 to which the channels 8a and 8b belong. Further, if the priority is smaller than the first threshold and equal to or greater than the second threshold, the group identifying unit 13 outputs the processing request to the data processing unit 14b assigned to the group 92 to which the channels 8c and 8d belong. Furthermore, if the priority is smaller than the second threshold, the group identifying unit 13 outputs the processing request to the data processing unit 14c assigned to the group 93 to which the channels 8e and 8f belong.

As described above, the group identifying unit 13 according to the present embodiment determines a group that processes the processing request according to the priority of the processing request.

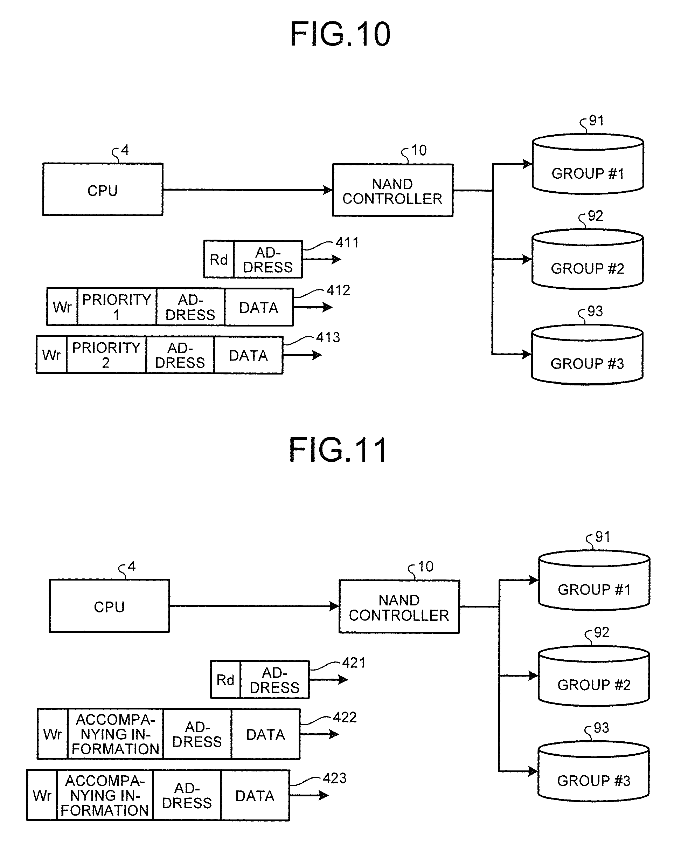

Further, with reference to FIG. 10, an outline of the overall data processing performed by the information processing apparatus according to the present embodiment will be described. FIG. 10 is a diagram for explaining an example of a case in which a group is selected on the NAND controller side. Herein, the priorities are represented by 1 to 3 such that the priority increases as the value of the priority decreases. Further, a case will be described in which the channels 8 are classified into three groups #1 to #3 according to performances.

A processing request 411 in FIG. 10 is a read request. Further, processing requests 412 and 413 are write requests. In the case of the read request, the CPU 4 outputs a normal read request, such as the processing request 411.

On the contrary, in the case of the write request, information indicating a priority is added as in the processing requests 412 and 413. Herein, the processing request 412 has a priority of 1 and the processing request 413 has a priority of 2.

The NAND controller 10, upon receiving the processing request 411, makes copies of the request and transfers the requests to all of the groups #1 to 3. Each of the groups performs an address translation, and if an address designated by the processing request 411 has been registered, the NAND controller 10 reads data from the NAND flash memory 7 having a storage area corresponding to this address. On the contrary, if the address designated by the processing request 411 has not been registered, the group that has received the request determines that the processing request is not directed thereto and discards the request.

Further, upon receiving the processing request 412, the NAND controller 10 checks information on the priority of the processing request 412, and confirms that the priority of the processing request 412 is 1. Then, the NAND controller 10 selects a group to which the channel with the highest performance belongs from among the groups #1 to 3, and processes the processing request 412 by using the data processing unit 14 assigned to the selected group.

Furthermore, upon receiving the processing request 413, the NAND controller 10 checks information on the priority of the processing request 413, and confirms that the priority of the processing request 413 is 2. Then, the NAND controller 10 selects a group to which the channel with the second highest performance belongs from among the groups #1 to 3, and processes the processing request 413 by using the data processing unit 14 assigned to the selected group.

In this case, the NAND controller 10 selects a group based on the priority; therefore, the CPU 4 need not recognize the state of division of the groups.

### Modified example

The method of selecting a group on the NAND controller 10 side is not limited to the method using the priority. For example, it may be possible to use accompanying information other than the priority added to the processing request.

In this case, in the case of a write process, a host device, such as the CPU 4, adds the accompanying information to the processing request. For example, the accompanying information may be a type of a host device that has output the processing request.

The group identifying unit 13 receives the processing request from the CPU 4. If the processing request is a write request, the group identifying unit 13 acquires the accompanying information stored in the processing request.

The group identifying unit 13 stores therein association between the accompanying information and a group. Herein, a case will be described in which the type of a host device that has output the processing request is used as the accompanying information. If the processing request is output from the CPU 4, it is presumed that the processing request is important; therefore, the group identifying unit 13 causes a group with a channel having a higher performance to process the processing request. On the contrary, for example, if the processing request is output from a local area network (LAN), it is presumed that the degree of importance of the processing request is low; therefore, the group identifying unit 13 causes a group with a channel having a lower performance to process the processing request.

Further, while the type of the host device serving as an output source of the processing request is used as the accompanying information, the accompanying information is not specifically limited as long as it is information that enables processing requests to be distinguished from one another. For example, the NAND controller 10 may use a logical address, a data size, and a type of software of an issuance source as the accompanying information, and may select a group by analyzing these pieces of accompanying information.

Furthermore, with reference to FIG. 11, an overview of the entire data processing performed by the information processing apparatus according to the present modified example will be described. FIG. 11 is a diagram for explaining another example of the case in which a group is selected on the NAND controller side. Herein, a case will be described in which the channels 8 are classified into three groups #1 to #3 according to performances.

A processing request 421 in FIG. 11 is a read request. Further, processing requests 422 and 423 are write requests. In the case of the read request, the CPU 4 outputs a normal read request, such as the processing request 421.

On the contrary, in the case of the write request, accompanying information is stored in a header or the like as in the processing requests 422 and 423.

The NAND controller 10, upon receiving the processing request 421, makes copies of the request and transfers the requests to all of the groups #1 to 3. Each of the groups performs an address translation, and if an address designated by the processing request 421 has been registered, the NAND controller 10 reads data from the NAND flash memory 7 having a storage area corresponding to the address designated by the processing request 421. On the contrary, if the address designated by the processing request 421 has not been registered, the group that has received the request determines that the processing request is not directed thereto and discards the request.

Further, upon receiving the processing request 422 or 423, the NAND controller 10 acquires the accompanying information of the processing request 422 or 423. Then, the NAND controller 10 selects a group to which data is written from among the groups #1 to #3 according to the acquired accompanying information.

Even in this case, the NAND controller 10 selects a group based on the accompanying information; therefore, the CPU 4 need not recognize the state of division of the groups.

As described above, the group identifying unit 13 according to the present embodiment can determine a group that processes the processing request according to the accompanying information.

As described above, in the information processing apparatuses according to the present embodiment and modified example, the NAND controller selects a group according to a processing request. Therefore, it becomes possible to centralize processes related to the groups into the NAND controller side and suppress a change to be added to processes performed by the CPU or the like, enabling to easily improve the performance of the entire system and the resource use efficiency.

### [c] Third Embodiment

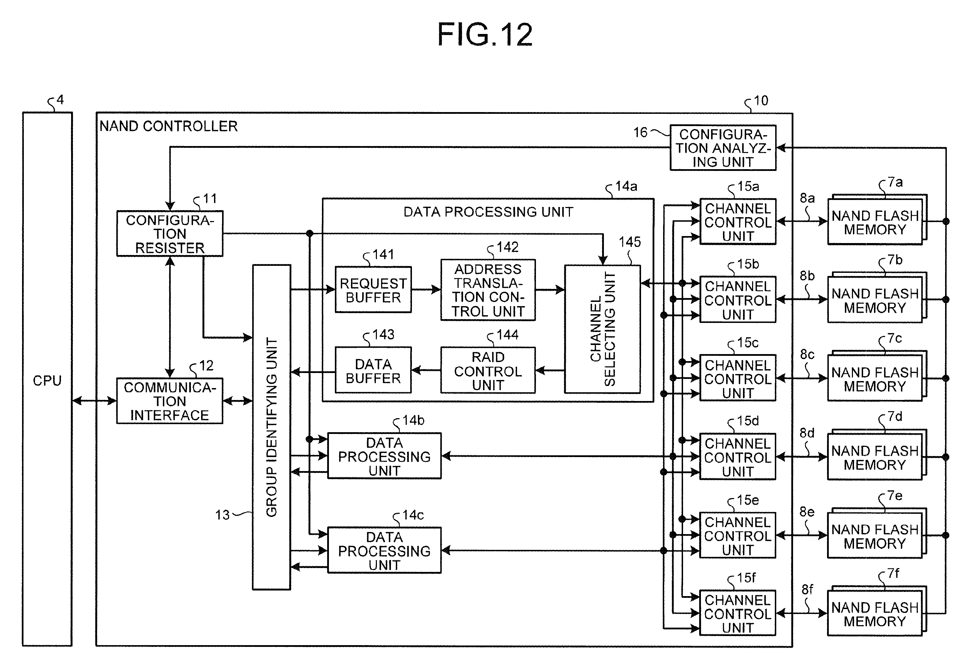

Next, a third embodiment will be described. An information processing apparatus according to the present embodiment differs from the first embodiment in that a NAND controller automatically configures groups. FIG. 12 is a block diagram of the NAND controller according to the third embodiment. The NAND controller 10 according to the present embodiment further includes a configuration analyzing unit 16 in addition to the functional units of the NAND controller 10 of the first embodiment. In the description below, explanation of components with the same functions as those of the first embodiment will be omitted.

Each of the NAND flash memories 7a to 7f has a specification storage area in which specification information on itself is stored. The specification information is, for example, a manufacturer, a speed, or the like. Further, while the NAND flash memories are described as examples in the present embodiment, other memory devices may have specification storage areas. For example, in the case of a double-data-rate (DDR) 3 DIMM, a serial presence detect (SPD) serves as the specification storage area. Namely, in the case of other memory devices, the same advantageous effects as those of the present embodiment can be obtained as long as they have specification storage areas.

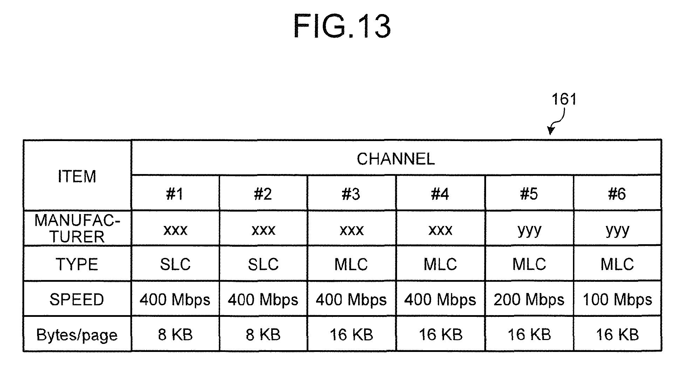

The configuration analyzing unit 16 acquires specification information from each of the specification storage areas of the NAND flash memories 7a to 7f. FIG. 13 is a diagram illustrating an example of a device information table. A device information table 161 illustrated in FIG. 13 is a table in which pieces of specification information that the configuration analyzing unit 16 has read from the NAND flash memories 7a to 7f are collected. In the device information table 161, specifications of the NAND flash memories 7a to 7f are represented in association with the respective channels 8a to 8f.

As illustrated in the device information table 161, the configuration analyzing unit 16 acquires, as the specification information on the NAND flash memories 7a to 7f, a manufacture, a type, a speed, and a volume per page for example. Then, the configuration analyzing unit 16 performs setting of a group configuration of each of the channels in the configuration register 11 by using the acquired information.

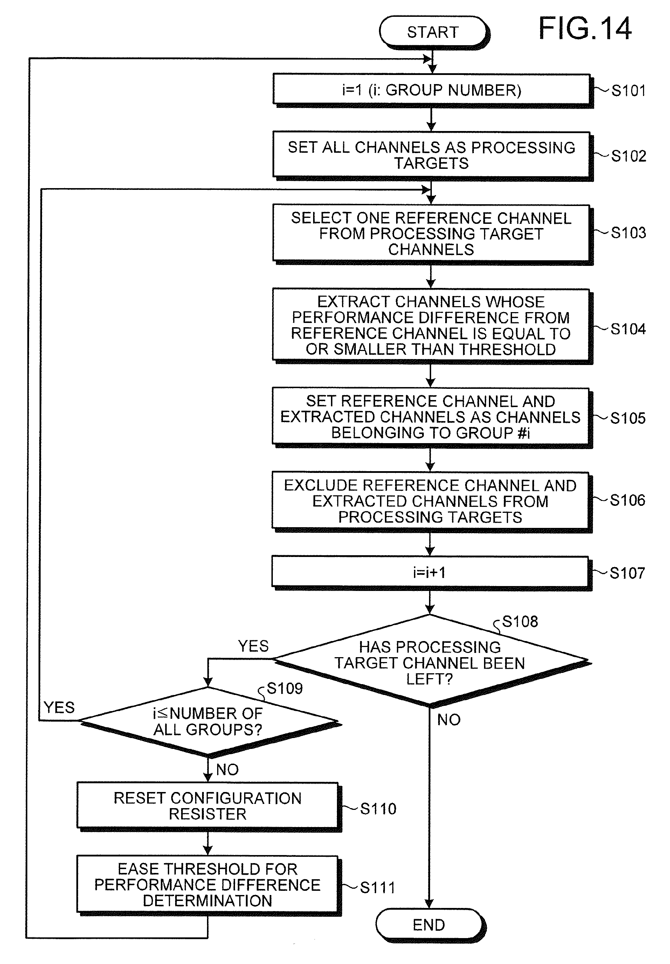

FIG. 14 is a flowchart for setting a group configuration according to the third embodiment. The configuration analyzing unit 16 pre-stores therein a threshold for a performance difference for classifying the channels into groups.

The configuration analyzing unit 16 sets a variable i, which represents a group number of a group #i, to an initial value of 1 (Step S101).

Subsequently, the configuration analyzing unit 16 sets all of the channels 8a to 8f as processing targets (Step S102).

Then, the configuration analyzing unit 16 selects one of the channels 8a to 8f set as the processing targets, and sets the selected channel as a reference channel (Step S103).

Subsequently, the configuration analyzing unit 16 extracts channels whose performance difference from the reference channel is equal to or smaller than a predetermined threshold from among the processing target channels (Step S104).

Then, the configuration analyzing unit 16 sets the reference channel and the extracted channels as channels belonging to the group #i (Step S105).

Subsequently, the configuration analyzing unit 16 excludes the reference channel and the extracted channels from the processing targets (Step S106).

Then, the configuration analyzing unit 16 increments the value of the variable i representing the group number by one (Step S107).

Subsequently, the configuration analyzing unit 16 determines whether a processing target channel has been left (Step S108). If the processing target channel has been left (Step S108: YES), the configuration analyzing unit 16 determines whether i is equal to or smaller than the number of all of the groups (Step S109). In other words, the configuration analyzing unit 16 determines whether there is a vacant group for which setting is possible.

If it is equal to or smaller than the number of all of the groups (Step S109: YES), the configuration analyzing unit 16 returns the process to Step S103.

On the contrary, if it is greater than the number of all of the groups (Step S109: NO), the configuration analyzing unit 16 resets the configuration register 11 (Step S110).

Then, the configuration analyzing unit 16 increases the threshold for determining a performance difference from the reference channel (Step S111), that is, eases the determination condition, and returns the process to Step S101.

On the contrary, if no processing target channel has been left (Step S108: NO), the configuration analyzing unit 16 ends the setting of the group configuration in the configuration register 11.

By performing the above described processes, the configuration analyzing unit 16 can perform setting such that all of the channels 8a to 8f belong to any of the groups without duplication. Further, in the present embodiment, when all of the channels are classified into a smaller number of groups than the number of all of the groups, the process of setting the group configuration is terminated; however, other methods may be employed. For example, if the number of groups is smaller than the number of all of the groups when no processing target is left, the configuration analyzing unit 16 may set a stricter threshold and perform a group configuration again. The configuration analyzing unit 16 corresponds to an example of a " group configuring unit".

The configuration register 11 stores therein the group configuration set by the configuration analyzing unit 16.

The group identifying unit 13 and the data processing units 14a to 14c receive the group configuration set by the configuration analyzing unit 16 from the configuration register 11, and processes data processing requests.

As described above, the information processing apparatus according to the present embodiment automatically generates a group configuration from the specifications of storage devices. Therefore, an operator need not determine the group configuration, so that loads on the operator can be reduced. Further, if a storage device is changed, the group configuration is automatically changed, so that it becomes possible to easily improve the performance of the entire system and the resource use efficiency.

Furthermore, in the above description, a function to automatically generate a group configuration is provided on the NAND controller; however, the group configuration may be generated by others rather than the NAND controller. For example, it may be possible to cause an external computer to acquire performance information on channels, cause the computer to run a program that executes the flow in FIG. 14 to generate a group configuration, and store a result in the configuration register 11.

### [d] Fourth Embodiment

Next, a fourth embodiment will be described. An information processing apparatus according to the present embodiment differs from the first embodiment in that groups are configured such that duplication of channels among multiple groups is allowed. The NAND controller 10 according to the present embodiment is represented by the block diagram in FIG. 2. In the description below, explanation of components with the same functions as those of the first embodiment will be omitted.

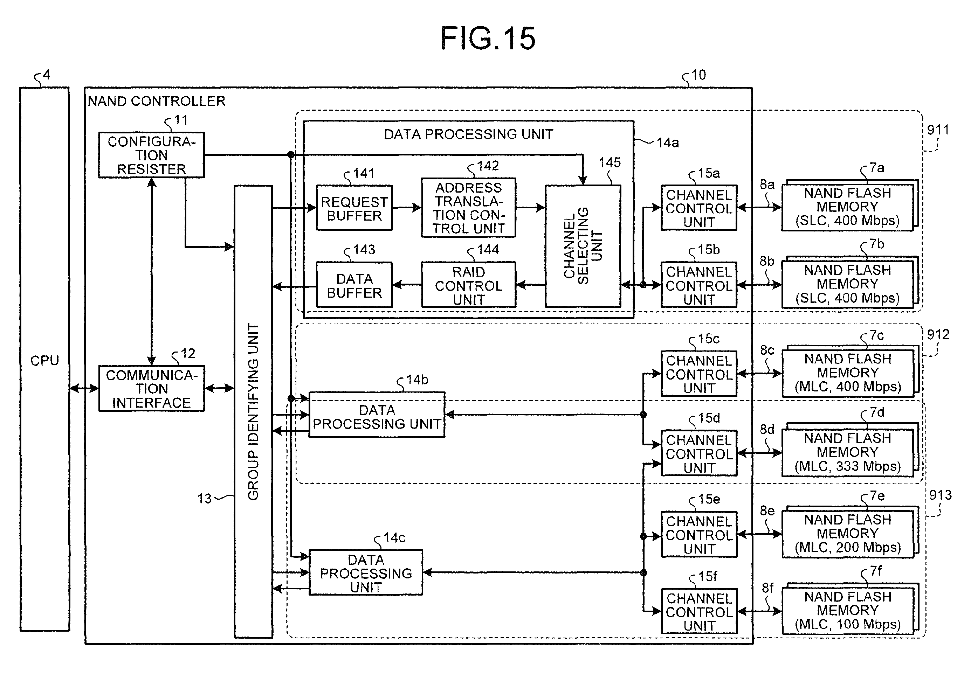

The configuration register 11 stores therein, as illustrated in FIG. 15 for example, a group configuration that is generated such that duplication of channels 8 among the groups is allowed. FIG. 15 is a diagram illustrating an example of a group configuration generated by the information processing apparatus according to the fourth embodiment.

In FIG. 15, the channels 8a and 8b belong to a group 911. Further, the channels 8c and 8d belong to a group 912. Furthermore, the channels 8d to 8f belong to a group 913. That is, the channel 8d belongs to both of the groups 912 and 913.

The configuration register 11 stores therein which of the channels 8a to 8f are duplicated among the groups. Then, the configuration register 11 notifies the group identifying unit 13 and the channel selecting unit 145 of the group configuration and information on the duplicated channel 8.

The channel selecting unit 145, when there is the duplicated channel 8 in the group to which the data processing unit 14 provided therewith belongs, preferentially uses channels that are not duplicated. If it is difficult to perform data processing by only the channels 8 that are not duplicated, the channel selecting unit 145 uses the duplicated channel 8 for the data processing.

For example, the channel selecting unit 145 of the data processing unit 14c in FIG. 15 uses the channels 8e and 8f when there a small number of processing requests. However, if processing requests increase, the channel selecting unit 145 of the data processing unit 14c uses the channel 8d for the data processing.

As described above, by allowing duplication of the channels among the groups, it becomes possible to use the duplicated channel as a buffer area when a processing load on each of the groups increases, enabling to further improve the resource use efficiency.

Further, in the above description, the explanation has been given based on the state in which the configuration register 11 stores therein a group configuration in which duplication of the channels 8 among the groups is allowed; however, even in the present embodiment, it is possible to automatically set the group configuration as in the third embodiment.

Therefore, setting of a group configuration when duplication of the channels 8 is allowed will be described below. Herein, similarly to the third embodiment, a case will be described in which the configuration analyzing unit 16 in FIG. 12 performs setting of a group configuration.

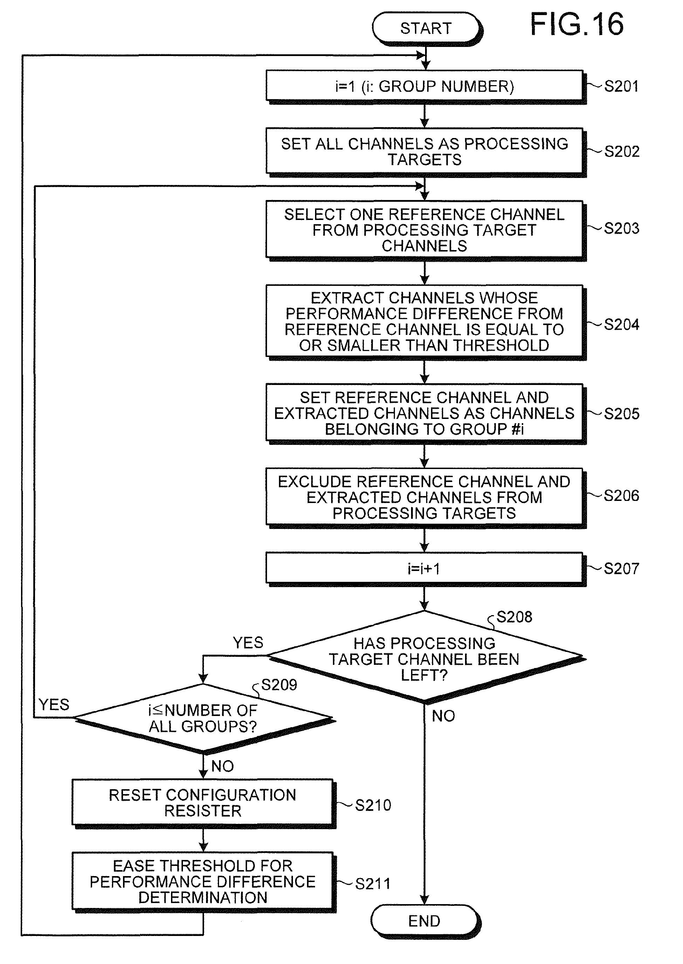

FIG. 16 is a flowchart for setting a group configuration according to the fourth embodiment. The configuration analyzing unit 16 pre-stores therein a threshold for a performance difference for classifying the channels into groups.

The configuration analyzing unit 16 sets a variable i, which represents a group number of the group #i, to an initial value of 1 (Step S201).

Subsequently, the configuration analyzing unit 16 sets all of the channels 8a to 8f as processing targets (Step S202).

Then, the configuration analyzing unit 16 selects one of the channels 8a to 8f set as the processing targets, and sets the selected channel as a reference channel (Step S203).

Subsequently, the configuration analyzing unit 16 extracts channels whose performance difference from the reference channel is equal to or smaller than a predetermined threshold from among all of the channels (Step S204).

Then, the configuration analyzing unit 16 sets the reference channel and the extracted channels as channels belonging to the group #i (Step S205).

Subsequently, the configuration analyzing unit 16 excludes the reference channel and the extracted channels from the processing targets (Step S206).

Then, the configuration analyzing unit 16 increments the value of the variable i representing the group number by one (Step S207).

Subsequently, the configuration analyzing unit 16 determines whether a processing target channel has been left (Step S208). If the processing target channel has been left (Step S208: YES), the configuration analyzing unit 16 determines whether i is equal to or smaller than the number of all of the groups (Step S209).

If it is equal to or smaller than the number of all of the groups (Step S209: YES), the configuration analyzing unit 16 returns the process to Step S203.

On the contrary, if it is greater than the number of all of the groups (Step S209: NO), the configuration analyzing unit 16 resets the configuration register 11 (Step S210).

Then, the configuration analyzing unit 16 increases the threshold for determining a performance difference from the reference channel (Step S211), that is, eases the determination condition, and returns the process to Step S201.

On the contrary, if there is no processing target channel (Step S208: NO), the configuration analyzing unit 16 ends the setting of the group configuration in the configuration register 11.

By performing the above described processes, the configuration analyzing unit 16 can automatically set a group configuration while allowing duplication of all of the channels 8a to 8f.

As described above, by automatically generating a group configuration while allowing duplication of the channels, it becomes possible to more flexibly improve the resource use efficiency.

According to an embodiment of the information processing apparatus, the storage device control circuit, and the storage device control method disclosed in this specification, it becomes possible to improve the processing performance and the resource use efficiency.

## Claims

1. An information processing apparatus (1) comprising:
an arithmetic processing unit (4);
a plurality of channels (8a-8f) each having a storage device (7a-7f);
a plurality of data processing units (14a-14f) that perform data processing on the storage devices (7a-7f) by using the channels (8a-8f) according to a data processing command from the arithmetic processing unit (4);
a group managing unit (11) that stores therein a configuration of groups into which the channels (8a-8f) are classified based on processing performances of the respective channels (8a-8f), and stores therein assignments of the data processing units (14a-14f) that perform data processing by using the channels (8a-8f) contained in each of the groups; and
a control unit (13) that, based on the data processing command from the arithmetic processing unit (4), selects a group for performing data processing from among the groups stored in the group managing unit (11), and causes the data processing unit (14a-14f) assigned to the selected group to perform the data processing.

2. The information processing apparatus (1) according to claim 1, wherein
the arithmetic processing unit (4) determines a group to be a target of data processing from among the groups stored in the group managing unit (11), and generates the processing command designating the determined group, and
the control unit (13) receives the processing command from the arithmetic processing unit (4), and sets a group designated by the received processing command as a group that performs the data processing.

3. The information processing apparatus (1) according to claim 1, wherein
the arithmetic processing unit (4) determines a priority of data processing, and generates the processing command containing information indicating the priority,
the group managing unit (11) stores therein performance information on the channels (8a-8f) belonging to each of the groups, and
the control unit (13) receives the processing command from the arithmetic processing unit (4), and selects a group for performing the data processing based on the performance information stored in the group managing unit (11) and the priority indicated by the processing command.

4. The information processing apparatus (1) according to claim 1, wherein
the arithmetic processing unit (4) generates the processing command containing accompanying information, and
the control unit (13) selects a group for performing the data processing based on the accompanying information.

5. The information processing apparatus (1) according to any one of claims 1 to 4, further comprising a group configuring unit (16) that determines the processing performances of the channels (8a-8f) based on performances of the storage devices (7a-7f), classifies the channels (8a-8f) into a plurality of groups, and stores the groups in the group managing unit (11).

6. The information processing apparatus (1) according to claim 5, wherein
the storage devices (7a-7f) store therein pieces of performance information on the storage devices, and
the group configuring unit (16) acquires the performance information stored in each of the storage devices (7a-7f).

7. The information processing apparatus according to any one of claims 1 to 6, wherein the group managing unit (11) stores therein a group configuration, in which the channels (8a-8f) are classified into a plurality of groups such that duplication is allowed.

8. A storage device control circuit (10) comprising:
a plurality of channels (7a-7f) each having a storage device (8a-8f);
a plurality of data processing units (14a-14f) that perform data processing on the storage devices (7a-7f) by using the channels (8a-8f);
a group managing unit (11) that stores therein a configuration of groups into which the channels (8a-8f) are classified based on processing performances of the respective channels (8a-8f), and stores therein assignments of the data processing units (14a-14f) that perform data processing by using the channels (8a-8f) contained in each of the groups; and
a control unit (13) that selects a group for performing data processing from among the groups stored in the group managing unit (11) based on a data processing command, and causes the data processing unit (14a-14f) assigned to the selected group to perform the data processing.

9. A storage device (7a-7f) control method comprising:
classifying a plurality of channels (8a-8f) each having the storage device (7a-7f) into a plurality of groups based on processing performances of the channels (8a-8f);
assigning a data processing circuit (14a-14f) that performs data processing by using the channels (8a-8f) contained in each of the groups, from among a plurality of data processing circuits (14a-14f) that perform data processing on the storage devices (7a-7f) by using the channels;
selecting a group that performs data processing from among the groups based on a data processing command; and
causing the data processing circuit (14a-14f) assigned to the selected group to perform the data processing.
